# EUROPEAN PATENT SPECIFICATION

(11) **EP 1 553 719 B1**
(45) Date of publication and mention of the grant of the patent: **15.06.2011**
(21) Application number: 05000147.8
(22) Date of filing: 05.01.2005
(51) Int. Cl.: H04L 9/08

(54) **Contents distribution system, method thereof and related server**
Einrichtung zur Verteilung eines Inhalts, Verfahren und zugehöriger Server
Système de distribution d'un contenu, procédé et serveur associé

(30) Priority: 07.01.2004 JP 2004002486
(43) Date of publication of application: 13.07.2005
(73) Proprietor: NEC Corporation, Minato-ku Tokyo 108-8001 (JP)
(72) Inventor: Hirose, Takeshi, Tokyo (JP)
(74) Representative: Glawe, Delfs, Moll

(56) References cited:
- WO-A-03/051056
- WO-A2-03/081913
- US-A1- 2003 003 899

## Description

### BACKGROUND OF THE PRESENT INVENTION

### Field of the present invention

The present invention relates to a contents distribution system, a method thereof, and a server, for enabling the minimization of the effect of communication charge and communication time at the time of distributing large-capacity contents, and charging in accordance with viewing time of the contents.

### Description of the Related Art

In recent years, with development, etc. of the Internet technology and a moving picture compression technology, services for distributing and selling large-capacity contents such as moving picture data to a user terminal via the Internet have been provided. Generally, in such services, digital contents, such as moving picture data, are in many cases stored in a server on the Internet, so as to be distributed in response to a request from a user terminal.

However, when large-capacity contents, such as a moving picture data are distributed and sold by means of a portable radio terminal which is a portable communication apparatus, such as a portable telephone or PDA (Personal Digital Assistant), a user must bear a greater burden of communication charge and communication time by using a mobile network such as a portable telephone communication network than a charge for the contents, as a result of which such services are made impractical.

In order to cope with the problem, there has been proposed a method for individually distributing encrypted contents data and encryption keys of the encrypted contents in Japanese Patent Application laid open JP 2003-229843.

Also, in Japanese Patent Application laid open JP 2003-6734, there has been proposed a technique, wherein an automatic vending machine comprises means for receiving encrypted contents data from a server, while a portable terminal comprises means for receiving the encrypted contents data from the automatic vending machine and means for receiving key data for decrypting from the server, and the server comprises means for performing charging at the time of transmitting the key data to the portable terminal, and thereby, in the case of downloading large-capacity digital contents, charge collection is performed while reducing a load imposed on a user.

WO 03/051056 A discloses a contents managing device comprising an encrypted contents acquisition section for acquiring encrypted contents information, an encrypted contents storage for storing the encrypted contents information acquired by the encrypted contents acquisition section and a communication section for transmitting the encrypted contents information via a network.

Furthermore, a content key is transmitted with encrypted form, the key is transmitted over a telephone line and a real-time stream cypher may be used.

### SUMMARY OF THE PRESENT INVENTION

However, the above described prior art has the following problems.

For individually distributing encrypted contents data and encryption key for the encrypted contents, the contents and encryption key need to be individually downloaded using independent procedures, which makes user's procedure complicated. In addition, there is a problem in which the contents themselves are not made into streams, thereby making charging in accordance with viewing time difficult, whereas traffic is extremely reduced in the case where fixed encryption keys are distributed and sold in order to avoid a high increase in the use's communication charge due to the increase of traffic caused by performing stream distribution of contents themselves, as a result of which a business interest on the side of communications carriers cannot be aroused.

It is therefore an object of the present invention to provide a contents distribution system, a method thereof, a server, for enabling large capacity contents, such as a moving picture, to be acquired and viewed inexpensively based on charging in accordance with viewing time only, and also a communication charge to be limited to a charge for acquiring an encryption key, thereby substantially reducing the communication charge.

This object is achieved by a contents distribution system according to claim 1, a server according to claim 6, and a contents distribution method according to claim 8; the dependent claims are related to further developments of the invention.

### BRIEF DESCRIPTION OF THE DRAWINGS

FIG. 1 is a diagram showing a system concept of an embodiment according to the present invention;
FIG. 2 a diagram showing a system construction in an embodiment according to the present invention;
FIG. 3 is a flowchart showing operation for encrypting and disclosing contents information in an embodiment according to the present invention;
FIG. 4 is a flowchart showing operation for acquiring encrypted contents information in an embodiment according to the present invention; and
FIG. 5 is a flowchart showing operation for charging by streaming of encryption key information in an embodiment according to the present invention.

### DESCRIPTION OF THE PREFERRED EMBODIMENT

Referring now to the drawings, a description will be given of a preferred embodiment of the present invention.

Charging which is performed only in accordance with viewing time so as to enable a user to acquire and view inexpensively large-capacity contents such as a moving picture, and communication charge which is limited to a charge for acquiring encryption key information so as to be substantially reduced, can be realized by providing, a contents encryption device comprising: an acquisition section for acquiring contents information; an encryption section for encrypting the contents information acquired by the acquisition section; and a transmission section for transmitting the contents information encrypted by the encryption section, a contents managing device comprising: an encrypted contents acquisition section for acquiring the encrypted contents information; an encrypted contents storage for storing the encrypted contents information acquired by the encrypted contents acquisition section; and a communication section for transmitting the encrypted contents information via a network, a streaming device comprising: an encryption key information acquisition section for acquiring encryption key information used for encrypting the contents information; an encryption key storage for making the encryption key information into a stream and storing the encryption key information; a communication section for transmitting the encryption key information made into a stream via the network; a transmission measuring section for measuring the state of transmission of the encryption key information by the communication section; and a charging processing section for calculating use charge based on the encrypted contents information and/or the encryption key information, each information being transmitted via the network.

In the following, the configuration and operation according to an embodiment of the present invention will be explained with reference to the accompanying drawings.

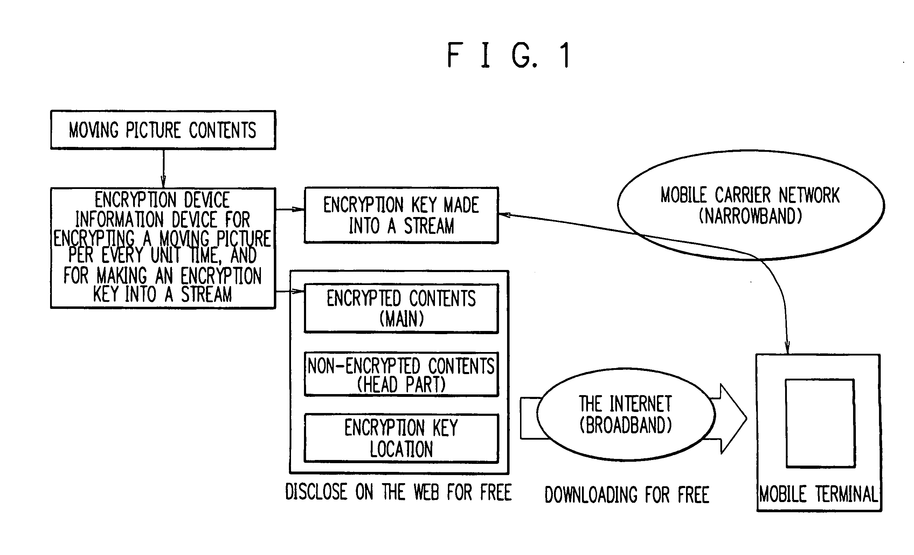

FIG. 1 is a diagram showing a concept of an embodiment according to the present invention. Referring to FIG. 1, moving picture contents are encrypted by an encryption device and encrypted contents, non-encrypted contents and encryption keys are disclosed on the homepage for free. A mobile terminal acquires the information disclosed for free via the Internet and the encryption key made into a stream via a mobile carrier network, so as to decrypt and view moving picture contents.

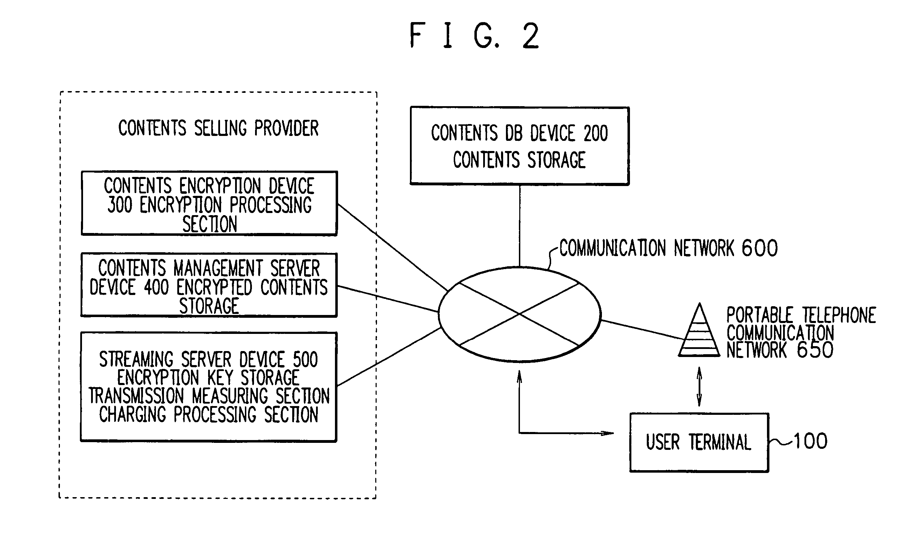

FIG. 2 is a diagram showing the configuration of a contents distribution system according to the embodiment. Referring to FIG. 2, the contents distribution system comprises a user terminal 100 which is a portable radio terminal, a contents DB device 200 which is operated by a content right holder or an enterprise entrusted by the content right holder, a contents encryption device 300 which performs encryption processing etc. of contents information at the side of an enterprise selling the contents, a contents management server device 400 which transmits encrypted contents information, etc. in response to a request from the user terminal 100, a streaming server device 500 which stores an encryption key, and a portable telephone communication network 650, each being connected via a communication network 600. In addition, the streaming server device 500 and the user terminal 100 are connected via the portable telephone communication network 650.

The user terminal 100 is a portable radio terminal which has a large-capacity data communication function with a speed higher than that of the portable telephone communication network 650. Here, the large-capacity data communication function is, for example, a wireless LAN etc. The portable radio terminal is also, for example, a portable telephone, PHS (Personal Handy Phone), a notebook-sized personal computer, a Personal Digital Assistant, or the like.

The user terminal 100 comprises a radio communication section which is a first communication section having a function of transmitting/receiving radio signals to/from a portable telephone base station, etc. included in the portable telephone communication network 650 connected to a portable phone etc., and a wireless LAN communication section which is a second communication section having a function of transmitting/receiving radio signals to/from a wireless LAN relaying apparatus (not shown). In this embodiment, the second communication section, which performs wireless LAN communication, may be other communication systems, such as Bluetooth or infrared communication system.

The user terminal 100 may further comprise: a GPS positioning section having a function of receiving a signal from a GPS Satellite to perform positioning of its own position; a camera section having a function of photographing a picture; an operation section comprising a ten key, a scroll key and a decision key, etc., to have a function of performing information input operation; a microphone and reception speaker which have a function of performing input/output operation corresponding to a transmission reception section having a function of performing voice signal processing; a notification speaker having a function of outputting a notice sound, etc.; a display having a function of displaying various kinds of information; a storage having a function of storing various settings relating to telephone book information, transmitting/receiving mail information, incoming/outgoing call information, portable radio terminal; and a control section having a function of performing control of each part of the portable radio terminal, and a function of performing control of telephone function, Internet connecting function, wireless LAN connecting function, mail function, GPS function, and camera function and the like. The user terminal 100, in which software for reproduction is installed, may also have a function of reproducing a moving picture of a predetermined format.

The contents DB device 200, which is an information processing device for managing a data base storing original contents information which is allowed to be distributed by a content right holder, is, for example, a workstation, etc. operated by a content right holder or an enterprise to which the contents management is entrusted by the content right holder. Moving pictures such as video, the other alphabetic characters, or still images, etc. are included in the original contents.

The contents encryption device 300, which is an information processing device provided on the side of a contents selling provider, has a function of performing processing for inserting into digital contents of, for example, a picture and voice, etc., particular information such as the name of maker and seller, as an electronic watermark, in a form which does not affect the quality of contents, in order to prevent illegal copying and interpolation of data from being performed on the original contents information acquired from the contents DB device 200. In addition, the contents encryption device 300 performs encryption processing of the original contents information, and also has a function of generating partial contents information which is not encrypted. The non-encrypted partial contents information is, for example, moving picture information of a head part of contents or edited digest moving picture information, etc.

The contents management server device 400, which is an information processing device provided on the side of a contents selling provider, has a function of acquiring and storing the original contents information encrypted by the contents encryption device 300 and the non-encrypted partial contents information, and of transmitting such information to the user terminal 100 in response to a request from the user terminal 100.

The streaming server device 500, which is an information processing device provided on the side of a contents selling provider, has a function of storing a key for decrypting the original contents information encrypted by the contents encryption device 300.

The network 600, which may be an arbitrary network, for example, the Internet or a LAN (Local Area Network), etc., may only have a function of transmitting/receiving data, and may be a wired or wireless network. In the case of a wired network, for example, a LAN cable, etc. may be used, while in the case of a wireless network, infrared communication, etc. may be used.

The portable telephone communication networks 650 is an arbitrary network which can be connected to the user terminal 100 which is a portable radio terminal, and has communication function of, for example, voice communication, the Internet communication and the like.

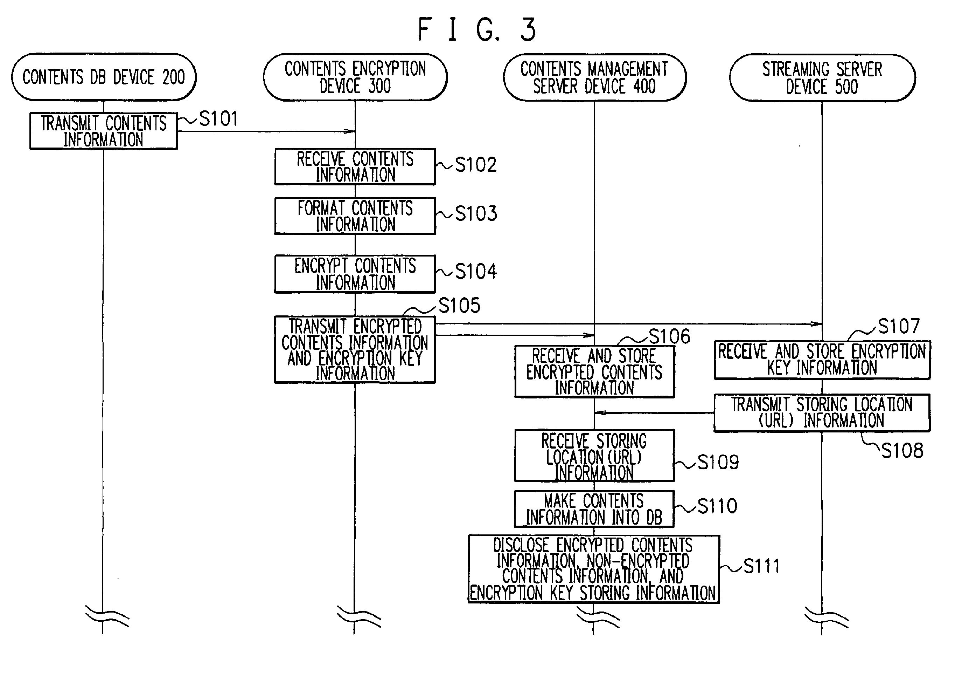

The operation of the contents distribution system in the embodiment constructed as described above will be explained with reference to FIGs. 3 to 5.

FIG. 3 shows processing procedure of distributed moving picture contents, in which a part of the contents such as a head part or a demonstration part, is stored without being encrypted, the original contents subsequent to the head part or the whole original contents are encrypted per a frame, an encryption key of the contents is made into a stream per a unit of time, and URL (Uniform Resource Locators) which stores the encryption key is specified, and the non-encrypted partial contents and the encrypted original contents and the URL are disclosed on a website for free.

First, the contents DB device 200 on the side of a content right holder acquires contents information from a contents storage, and transmits the contents information which is permitted to be sold, to the contents encryption device 300 provided on the side of a contents selling provider via the communication network 600 (step S101).

The contents encryption device 300 receives the contents information transmitted via the communication network 600 from the contents DB device 200 (step S102), and an encryption processing section of the contents encryption device 300 converts the acquired contents information into a predetermined format, for example, MPEG format, etc., while performing processing for preventing illegal copying and interpolation of data (step S103). The processing may be, for example, inserting of an electronic watermark information, etc.

The contents information converted into the predetermined format in step S103 is encrypted by the encryption processing section of the contents encryption device 300 using an encryption key information for encryption, while being made to be partial contents information which is not encrypted (step S104). Encryption of contents information may be performed at every predetermined number of frames of a moving picture. The non-encrypted partial contents information may be, for example, a head part of the contents or information of a digest portion which is extracted from the entire part of the contents and edited.

The contents encryption device 300 transmits the encrypted contents information and the partial contents information thus generated to the contents management server device 400 via the communication network 600, while transmitting the encryption key information to the streaming server device 500 via the communication network 600 (step S105).

The contents management server device 400 receives the encrypted contents information and the partial contents information thus generated from the contents encryption device 300 via the communication network 600, and stores the information in an encrypted contents storage (step S106).

The streaming server device 500 receives via the communication network 600 the encryption key information generated by the contents encryption device 300 and stores the encryption key information in an encryption key storage (step S107).

The streaming server device 500 which stores the encryption key information in the encryption key storage in step S107 transmits URL information indicating the location where the encryption key information is stored, to the contents management server device 400 via the communication network 600 (step S108).

The contents management server device 400 receives the URL information from the streaming server device 500 via the communication network 600 (step S109).

The contents management server device 400 makes the encrypted contents information, the partial contents information, and the URL information associate to each other and converts them into a database to store the database (step S110).

The contents management server device 400 discloses in a predetermined web area each information made into the database in step S110 (step S111). This enables each of above-mentioned information to be viewed by using WWW browser, etc. from the user terminal.

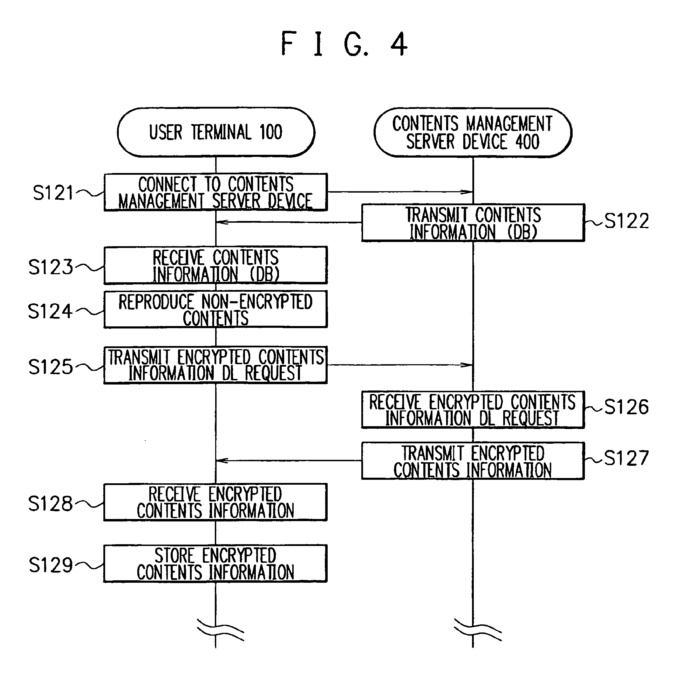

FIG. 4 is a diagram showing processing procedure in which a user acquires encrypted contents in conjunction with a distributed moving picture contents.

First, the user terminal 100 is connected through the wireless LAN communication section, which is the second communication section, to the contents management server device 400 via the communication network 600 (step S121). The contents management server device 400 may require a predetermined authentication information, for example, ID information or password information, etc., as an access permission condition, to be inputted from the operation section of the user terminal 100.

The contents management server device 400 retrieves and extracts the encrypted contents information, the partial contents information, and the URL information, which are associated to one another to be made into the database in step S110 in FIG. 3 and relates to the contents information required by the user terminal 100, and transmits the extracted contents information to the wireless LAN communication section which is the second communication section of the user terminal 100 via the communication network 600 (step S122).

The wireless LAN communication section which is the second communication section of the user terminal 100 receives the encrypted contents information, the partial contents information and the URL information, which are extracted from the contents management server device 400 and associated to one another to be made into the database, and the received information is displayed by the display of the user terminal 100 so as to be viewed by the user (step S123).

The wireless LAN communication section which is the second communication section of the user terminal 100 may receive the non-encrypted partial contents information which is searched and extracted from the encrypted contents storage of the contents management server device 400 by downloading it from the contents management server device 400 via the communication network 600, so as to reproduce the non-encrypted partial contents information as a picture on a display etc. (step S124). This enables a user to obtain reference information for determining whether to purchase the contents which the user wishes to view.

The wireless LAN communication section which is the second communication section of the user terminal 100 requires, by an input from the operation section, the contents management server device 400 to transmit the information of contents which the user wishes to view via the communication network 600 (step S125).

The contents management server 400 receives the information of contents which the user wishes to view from the user terminal 100 via the communication network 600 (step S126).

The contents management server device 400 retrieves and extracts the information of contents required by the user terminal 100 from the encrypted contents storage of the contents management server device 400, so as to transmit the extracted contents information to the wireless LAN communication section which is the second communication section of the user terminal 100 (step S127).

The wireless LAN communication section which is the second communication section of the user terminal 100 receives the contents information extracted from the contents management server device 400 (step S128), so as to store the received contents information in a predetermined storage (step S129).

The encrypted contents information may not be directly downloaded from the contents management server device 400 by the wireless LAN communication section which is the second communication section of the user terminal 100, but may be arranged to be downloaded by an information processing device, such as a personal computer, etc. (not shown) connected to a high-speed large-capacity line, so as to be acquired via a storage medium, such as a memory card.

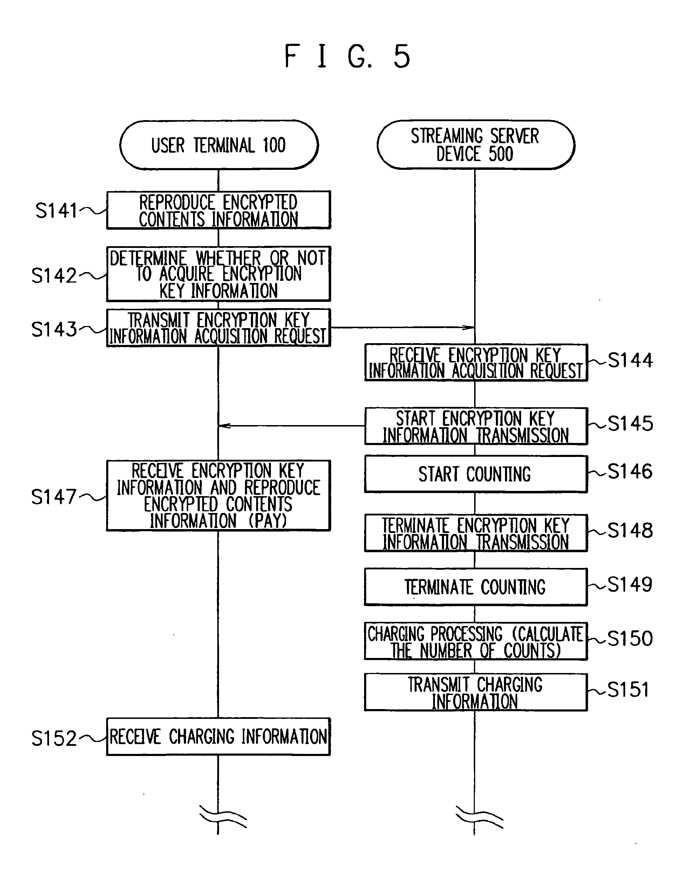

FIG. 5 is a diagram showing processing procedure in which a contents selling provider performs charging by streaming of the encryption key information.

In the user terminal 100, when reproduction of the non-encrypted partial contents information, such as a head part of contents, is ended, or when the downloaded encrypted contents information is reproduced (step S141), the display of the user terminal 100 displays a screen for selecting whether to acquire the encryption key information inserted beforehand in the partial contents information or a part of the encrypted contents information. That is, a user is notified that the subsequent viewing will be a pay service based on time charging (step S142).

In the case where a user wishes to acquire the encryption key information in order to view the contents information, the encrypted contents information, the partial contents information, and the URL information, which are received and associated to one another so as to be made into the database in step S123, are referred to by input operation from the operation section of the user terminal 100, and the URL information associated with the encrypted contents information desired to be viewed is specified, and an acquisition request for the encryption key information is transmitted via the portable telephone communication network 650 to the streaming server device 500 from the radio communication section which is the first communication section (step S143).

The streaming server device 500 receives the acquisition request for the encryption key information via the portable telephone communication network 650 from the radio communication section which is the first communication section of the user terminal 100 (step S144).

The streaming server device 500 which has received the acquisition request for the encryption key information, after acquiring and confirming ID information of the user terminal 100 which is a charging destination, extracts the required encryption key information from the encryption key storage, and transmits the encryption key information to the radio communication section which is the first communication section of the user terminal 100 via the portable telephone communication network 650 (step S145). At the same time, the transmission measuring section starts counting transmission time and the number of transmissions of the encryption key (step S146).

The user terminal 100 decrypts the encrypted contents information at every frame using the encryption key information downloaded via the portable telephone communication network 650 by the radio communication section which is the first communication section, so as to reproduce the contents information (step S147).

When the user terminal 100 discontinues or ends the reproduction of a moving picture based on the contents information, the streaming server device 500 discontinues transmission of the encryption key information to the radio communication section which is the first communication section via the portable telephone communication network 650 (step S148), and simultaneously stops counting transmission time or the number of transmissions of the encryption key performed by the transmission measuring section of the streaming server device 500 (step S149).

The streaming server device 500 then makes the charging processing section calculate the charge to be imposed on the reception of the contents information and to be paid by the user based on the number of counts performed by the transmission measuring section. The charging processing may be a method of charging in proportion to the transmission time, or a method of charging in proportion to the number of transmissions (step S150).

Finally, the streaming server device 500 transmits the charge information calculated in the charging processing section via the communication network 600 to the wireless LAN communication section which is the second communication section of the user terminal 100 (step S151), and the user terminal 100 receives the charge information, and displays the charge information on a display etc. (step S152).

Additionally, machine readable recording media, such as a magnetic disk or semiconductor memory, in which a program for performing contents distribution is recorded, are incorporated in the user terminal 100, the contents DB device 200, the contents encryption device 300, the contents management server device 400, the streaming server devices 500 or other information processing devices so as to be used, and thereby the program for performing contents distribution can be read into the information processing devices from the above mentioned recording media so as to control the operation of the information processing devices, as a result of which the processing operation shown in FIGs. 3 to 5 in the above mentioned embodiment can be realized.

Incidentally, for example, the above described first and second communication sections of the user terminal 100 may be a form using the same interface of the user terminal 100, and the first and second communication sections of the user terminal 100 may be a form utilizing the same network provided with a plurality of stages of information transfer capabilities.

As set forth hereinabove, in accordance with the present invention, charging performed only based on viewing time enables a user to acquire and view inexpensively large-capacity contents, such as a moving picture. Communication charge is also limited to a charge for acquiring encryption key information so as to be substantially reduced. Besides, in contrast to distribution and sales of fixed encryption keys in which traffic is extremely reduced, charging can be performed in accordance with viewing time of a user, which enables a business interest on the side of communication carrier to be aroused.

Further, the present invention may also be applied to an information distribution system utilizing a multimedia information terminal.

While the present invention has been described with reference to the particular illustrative embodiment, it is not to be restricted by the embodiment but only by the appended claims. It is to be appreciated that those skilled in the art can change or modify the embodiment without departing from the scope of the present invention as defined by the appended claims.

## Claims

1. A contents distribution system including a server and a user terminal (100) which are connected via a network (600), wherein:
the server comprises:
an acquisition section for acquiring contents information;
an encryption section (300) for encrypting contents information acquired by the acquisition section;
an encrypted contents storage (400) for storing contents information encrypted by the encryption section; and
an encryption key storage (500) for making encryption key information used for encrypting by the encryption section into a stream and storing the encryption key information, and
the user terminal (100) comprises:
a first communication section for receiving the encrypted contents information from the server via a first network (600);
a second communication section for receiving the encryption key information made into a stream from the server via a second network (650) having a speed lower than the first network; and
a decryption section for decrypting the encrypted contents information received by the first communication section using the encryption key information received by the second communication section, **characterized in that** the server further comprises a transmission measuring section for measuring the state of transmission of the encryption key information enabling the user terminal (100) to receive the encryption key information by the second communication section, wherein the transmission measuring section measures transmission time and/or the number of transmissions of the encryption key information to the user terminal.

2. The contents distribution system according to claim 1, wherein the server further comprises a charging processing section for calculating use charge based on the encrypted contents information and/or the encryption key information, each information being received by the user terminal (100) via the network.

3. The contents distribution system according to claim 1 or 2, wherein the user terminal (100) further comprises a display for displaying the encrypted contents information decrypted by the decryption section.

4. The contents distribution system according to any of claims 1 to 3, wherein the server further comprises:
a generation section for generating partial contents information which is contents information acquired by the acquisition section and which is not encrypted by the encryption section, and
a partial contents information disclosing section for enabling the non-encrypted partial contents information generated by the generation section to be disclosed and viewed by the user terminal.

5. The contents distribution system according to any of claims 1 to 4, wherein the server further comprises an encryption key location information disclosing section for enabling information of location where the encryption key information is stored by the encryption key storage to be disclosed and viewed by the user terminal.

6. A server comprising:
an acquisition section for acquiring contents information;
an encryption section (300) for encrypting contents information acquired by the acquisition section;
an encrypted contents storage (400) for storing contents information encrypted by the encryption section;
an encryption key storage (500) for making encryption key information used for encrypting by the encryption section into a stream, and storing the encryption key information; and
a communication section for transmitting the encrypted contents information via a first network (650), and transmitting the encryption key information made into a stream via a second network (650) having a speed lower than the first network; **characterized by**
a transmission measuring section for measuring the state of transmission of the encryption key information by the communication section, wherein the transmission measuring section measures transmission time and/or the number of transmissions of the encryption key information.

7. The server according to claim 6, further comprising a charging processing section for calculating use charge based on the encrypted contents information and/or encryption key information, each information being transmitted via the network.

8. A contents distribution method utilizing a server and a user terminal (100) which are connected via a network, wherein:
the server comprises the steps of:
acquiring contents information by an acquisition section;
encrypting by an encryption section (300) contents information acquired by the acquisition section;
storing by an encrypted contents storage (400) the contents information encrypted by the encryption section;
making an encryption key storage (400) convert encryption key information used for encrypting by the encryption section into a stream and store the encryption key information, and
the user terminal (100) comprises the steps of:
receiving the encrypted contents information from the server by a first communication section via a first network;
receiving the encryption key information made into a stream from the server by a second communication section via a second network with a speed lower than the first network; and
decrypting by a decryption section the encrypted contents information received by the first communication section using the encryption key information received by the second communication section, **characterized by** further comprising in the server the step of:
measuring by a transmission measuring section the state of transmission of the encryption key information so as to enable the user terminal to receive the encryption key information by the second communication section, wherein in the measuring step, the transmission measuring section measures time and/or the number of transmissions of the encryption key information to the user terminal.

9. The contents distribution method according to claim 8, wherein the server further comprises the step of calculating use charge by a charging processing section based on the encrypted contents information and/or the encryption key information, each information being received by the user terminal via the network.

10. The contents distribution method according to claim 8 or 9, wherein the user terminal further comprises the step of displaying by a display the encrypted contents information decrypted by the decryption section.

11. The contents distribution method according to any of claims 8 to 10, wherein the server further comprises the steps of:
generating by a generation section partial contents information which is acquired by the acquisition section and which is not encrypted by the encryption section; and
enabling the non-encrypted partial contents information generated by the generation section to be disclosed by a partial contents information disclosing section and to be viewed by the user terminal.

12. The contents distribution method according to any of claims 8 to 11, wherein the server further comprises the step of disclosing by an encryption key location information disclosing section information of location where the encryption key information is stored by the encryption key storage to allow the user terminal to view the location information.

## Patentansprüche

1. Inhaltsverteilungssystem mit einem Server und einem Nutzeranschluss (100), die über ein Netzwerk (600) verbunden sind, wobei:
der Server aufweist:
einen Erlangungsabschnitt zum Erlangen von Inhaltsinformation,
einen Verschlüsselungsabschnitt (300) zum Verschlüsseln von Inhaltsinformation, die durch den Erlangungsabschnitt erlangt wurde,
einen Verschlüsselungsinhaltsspeicher (400) zum Speichern von Inhaltsinformation, die durch den Verschlüsselungsabschnitt verschlüsselt wurde, und
einen Verschlüsselungsschlüsselspeicher (500) zum Umsetzen von Verschlüsselungsschlüsselinformation, die zum Verschlüsseln durch den Verschlüsselungsabschnitt verwendet wird, in einen Strom und zum Speichern der Verschlüsselungsschlüsselinformation und
wobei der Nutzeranschluss (100) aufweist:
einen ersten Kommunikationsabschnitt zum Empfangen der verschlüsselten Inhaltsinformation von dem Server über ein erstes Netzwerk (600),
einen zweiten Kommunikationsabschnitt zum Empfang der Verschlüsselungsschlüsselinformation, die in einen Strom umgesetzt wurde, von dem Server über ein zweites Netzwerk (650), das eine geringere Geschwindigkeit als das erste Netzwerk aufweist, und
einen Entschlüsselungsabschnitt zum Entschlüsseln der verschlüsselten Inhaltsinformation, die von dem ersten Kommunikationsabschnitt empfangen wurde, unter Verwendung der Verschlüsselungsschlüsselinformation, die von dem zweiten Kommunikationsabschnitt empfangen wurde, **dadurch gekennzeichnet, dass** der Server ferner einen Übertragungsmessabschnitt aufweist zum Messen des Zustandes der Übersendung der Verschlüsselungsschlüsselinformation, die es dem Nutzeranschluss (100) ermöglicht, die Verschlüsselungsschlüsselinformation durch den zweiten Kommunikationsabschnit zu empfangen, wobei der Übertragungsmessabschnitt die Übertragungszeit und/oder die Anzahl von Übertragungen der Verschlüsselungsschlüsselinformation an den Nutzerabschnitt misst.

2. Inhaltsverteilungssystem nach Anspruch 1, wobei der Server ferner einen Gebührenverarbeitungsabschnitt aufweist zum Berechnen von Nutzungsgebühren basierend auf der verschlüsselten Inhaltsinformation und/oder der Verschlüsselungsschlüsselinformation, wobei jede Information von dem Nutzeranschluss (100) über das Netzwerk erhalten wird.

3. Inhaltsverteilungssystem nach Anspruch 1 oder 2, wobei der Nutzeranschluss (100) ferner eine Anzeige aufweist zum Anzeigen der verschlüsselten Inhaltsinformation, die durch den Entschlüsselungsabschnitt entschlüsselt wurde.

4. Inhaltsverteilungssystem nach einem der Ansprüche 1 bis 3, wobei der Server ferner aufweist:
einen Generatorabschnitt zum Erzeugen einer Teilinhaltsinformation, die Inhaltsinformation ist, die durch den Erlangungsabschnitt erlangt wurde und die nicht durch den Verschlüsselungsabschnitt verschlüsselt wurde, und
einen Teilinhaltsinformationsmitteilungsabschnitt zum Ermöglichen, dass die nicht verschlüsselte Teilinhaltsinformation, die durch den Generatorabschnitt erzeugt wurde, mitgeteilt und über den Nutzeranschluss gesehen werden kann.

5. Inhaltsverteilungssystem nach einem der Ansprüche 1 bis 4, wobei der Server ferner einen Verschlüsselungsschlüsselpositionsinformations-Mitteilungsabschnitt aufweist zum Freigeben von Information der Position, in der die Verschlüsselungsschlüsselinformation durch den Verschlüsselungsschlüsselspeicher gespeichert ist, um mitgeteilt zu werden und an dem Nutzeranschluss gesehen zu werden.

6. Server mit:
einem Erlangungsabschnitt zum Erlangen von Inhaltsinformation,
einem Verschlüsselungsabschnitt (300) zum Verschlüsseln von Inhaltsinformation, die durch den Erlangungsabschnitt erlangt wurde,
einem Verschlüsselungsinhaltsspeicher (400) zum Speichern von Inhaltsinformation, die durch den Verschlüsselungsabschnitt verschlüsselt wurde,
einem Verschlüsselungsschlüsselspeicher (500) zum Umsetzen von Verschlüsselungsschlüsselinformation, die zum Verschlüsseln durch den Verschlüsselungsabschnitt verwendet wird, in einen Strom und zum Speichern der Verschlüsselungsschlüsselinformation, und
einem Kommunikationsabschnitt zum Übertragen der verschlüsselten Inhaltsinformation über ein erstes Netzwerk (650) und zum Übertragen der Verschlüsselungsschlüsselinformation, die in einen Strom umgesetzt wurde, über ein zweites Netzwerk (650), das eine geringere Geschwindigkeit als das erste Netzwerk aufweist, **gekennzeichnet durch**
einen Übertragungsmessabschnitt zum Messen des Zustandes der Übertragung der Verschlüsselungsschlüsselinformation **durch** den Kommunikationsabschnitt, wobei der Übertragungsmessabschnitt die Übertragungszeit und/oder die Zahl von Übertragungen der Verschlüsselungschlüsselinformation misst.

7. Server nach Anspruch 6 mit ferner einem Gebührenverarbeitungsabschnitt zum Berechnen von Nutzergebühren basierend auf der verschlüsselten Inhaltsinformation und/oder der Verschlüsselungsschlüsselinformation, wobei jede Information über das Netzwerk übertragen wird.

8. Inhaltsverteilungsverfahren, das einen Server und einen Nutzeranschluss (100) verwendet, die über ein Netzwerk verbunden sind, wobei:
der Server die Schritte aufweist:
Erlangen von Inhaltsinformation über einen Erlangungsabschnitt,
Verschlüsseln von Inhaltsinformation, die durch den Erlangungsabschnitt erlangt wurde, durch einen Verschlüsselungsabschnitt (300), Speichern der Inhaltsinformation, die durch den Verschlüsselungsabschnitt verschlüsselt wurde, in einem Verschlüsselungsinhaltsspeicher (400),
Veranlasssen eines Verschlüsselungsschlüsselspeichers (400) zur Umsetzung von Verschlüsselungsschlüsselinformation, die zum Verschlüsseln durch den Verschlüsselungsabschnitt verwendet wurde, in einen Strom und zum Speichern der Verschlüsselungsschlüsselinformation, und
der Nutzeranschluss (100) die Schritte aufweist:
Empfangen der verschüsselten Inhaltsinformation von dem Server über einen Kommunikationsabschnitt über ein erstes Netzwerk,
Empfangen der verschlüsselten Verschlüsselungsinformation, die in einen Strom umgesetzt wurde, von dem Server durch einen zweiten Kommunikationsabschnitt über ein zweites Netzwerk mit einer Geschwindigkeit, die geringer ist als die des ersten Netzwerks, und
Entschlüsseln der verschlüsselten Inhaltsinformation, die von dem ersten Kommunikationsabschnitt empfangen wurde durch einen Entschlüsselungsabschnitt unter Verwendung der Verschlüsselungsschlüsselinformation, die von dem zweiten Kommunikationsabschnitt empfangen wurde, **gekennzeichnet durch** ferner die Schritte in dem Server:
Messen des Zustandes der Übertragung der Verschlüsselungsschlüsselinformation **durch** einen Übertragungsmessabschnitt, um so es dem Nutzeranschluss zu ermöglichen, die Verschlüsselungsschlüsselinformation **durch** den zweiten Kommunikationsabschnitt zu empfangen, wobei in dem Messschritt der Übertragungsmessabschnitt die Zeit und/oder die Anzahl von Übertragungen der Verschlüsselungsschlüsselinformation an den Nutzeranschluss misst.

9. Inhaltsverteilungsverfahren nach Anspruch 8, wobei der Server ferner einen Schritt der Berechnung von Nutzungsgebühren durch einen Gebührenverarbeitungsabschnitt basierend auf der verschlüsselten Inhaltsinformation und/oder der Verschlüsselungsschlüsselinformation aufweist, wobei jede Information durch den Nutzeranschluss über das Netzwerk empfangen wird.

10. Inhaltsverteilungsverfahren nach Anspruch 8 oder 9, wobei der Nutzeranschluss ferner den Schritt der Anzeige der verschlüsselten Inhaltsinformation, die durch den Entschlüsselungsabschnitt entschlüsselt wurde, auf einer Anzeige aufweist.

11. Inhaltsverteilungsverfahren nach einem der Ansprüche 8 bis 10, wobei der Server ferner die Schritte aufweist:
Erzeugen von Teilinhaltsinformation, die durch den Erlangungsabschnitt erlangt wurde und die nicht durch den Verschlüsselungsabschnitt verschlüsselt wurde, durch einen Generatorabschnitt, und
Ermöglichen, dass die nicht verschlüsselte Teilinhaltsinformation, die durch den Generatorabschnitt erzeugt wurde, durch einen Teilinhaltsinformationsmitteilungsabschnitt mitgeteilt wird und über den Nutzeranschluss gesehen werden kann.

12. Inhaltsverteilungsverfahren nach einem der Ansprüche 8 bis 11, wobei der Server ferner den Schritt der Mitteilung durch einen Verschlüsselungsschlüsselpositionsinformations-Mitteilungsabschnitt aufweist von Information der Position, wo die Verschlüsselungsschlüsselinformation durch den Verschlüsselungsschlüsselspeicher gespeichert ist, um es dem Nutzeranschluss zu ermöglichen, die Positionsinformation zu sehen.

## Revendications

1. Système de distribution de contenu comportant un serveur et un terminal utilisateur (100) lesquels sont connectés via un réseau (600), dans lequel :
le serveur comprend :
une section d'acquisition pour acquérir des informations connexes au contenu ;
une section de chiffrement (300) pour chiffrer les informations connexes au contenu acquises par la section d'acquisition ;
un stockage de contenu chiffré (400) pour stocker les informations connexes au contenu chiffrées par la section de chiffrement ; et
un stockage de clés de chiffrement (500) pour convertir les informations relatives aux clés de chiffrement, utilisées pour le chiffrement par la section de chiffrement, en un flux, et pour stocker les informations relatives aux clés de chiffrement ; et
le terminal utilisateur (100) comprend :
une première section de communication pour recevoir les informations connexes au contenu chiffrées à partir du serveur via un premier réseau (600) ;
une seconde section de communication pour recevoir les informations relatives aux clés de chiffrement converties en un flux à partir du serveur via un second réseau (650) présentant un débit inférieur à celui du premier réseau ; et
une section de déchiffrement pour déchiffrer les informations connexes au contenu chiffrées reçues par la première section de communication, en utilisant les informations relatives aux clés de chiffrement reçues par la seconde section de communication, **caractérisé en ce que** le serveur comporte en outre une section de mesure de transmission pour mesurer l'état de transmission des informations relatives aux clés de chiffrement permettant au terminal utilisateur (100) de recevoir les informations relatives aux clés de chiffrement par le biais de la seconde section de communication, dans laquelle la section de mesure de transmission mesure le temps de transmission et/ou le nombre de transmissions des informations relatives aux clés de chiffrement au terminal utilisateur.

2. Système de distribution de contenu selon la revendication 1, dans lequel le serveur comprend en outre une section de traitement de charge pour calculer une charge d'utilisation sur la base des informations connexes au contenu chiffrées et/ou des informations relatives aux clés de chiffrement, chacune des informations étant reçue par le terminal utilisateur (100) via le réseau.

3. Système de distribution de contenu selon la revendication 1 ou 2, dans lequel le terminal utilisateur (100) comprend en outre un affichage pour afficher les informations chiffrées connexes au contenu déchiffrées par la section de déchiffrement.

4. Système de distribution de contenu selon l'une quelconque des revendications 1 à 3, dans lequel le serveur comprend en outre :
une section de génération pour générer des informations connexes au contenu partielles qui représentent des informations connexes au contenu acquises par la section d'acquisition et qui ne sont pas chiffrées par la section de chiffrement ; et
une section de divulgation d'informations connexes au contenu partielles pour permettre aux informations connexes au contenu partielles non chiffrées générées par la section de génération d'être divulguées et consultées par le terminal utilisateur.

5. Système de distribution de contenu selon l'une quelconque des revendications 1 à 4, dans lequel le serveur comprend en outre une section de divulgation d'informations de localisation de clés de chiffrement pour permettre aux informations de localisation de l'emplacement où les informations relatives aux clés de chiffrement sont stockées par le stockage de clés de chiffrement, d'être divulguées et affichées par le terminal utilisateur.

6. Serveur comprenant :
une section d'acquisition pour acquérir des informations connexes au contenu ;
une section de chiffrement (300) pour chiffrer des informations connexes au contenu acquises par la section d'acquisition ;
un stockage de contenu chiffré (400) pour stocker des informations connexes au contenu chiffrées par la section de chiffrement ; et
un stockage de clés de chiffrement (500) pour convertir des informations relatives aux clés de chiffrement utilisées pour le chiffrement par la section de chiffrement en un flux, et pour stocker les informations relatives aux clés de chiffrement ; et
une section de communication pour transmettre les informations connexes au contenu chiffrées via un premier réseau (650), et pour transmettre les informations relatives aux clés de chiffrement converties en un flux via un second réseau (650) présentant un débit inférieur à celui du premier réseau ; **caractérisé par**
une section de mesure de transmission pour mesurer l'état de transmission des informations relatives aux clés de chiffrement par le biais de la section de communication, dans laquelle la section de mesure de transmission mesure le temps de transmission et/ou le nombre de transmissions des informations relatives aux clés de chiffrement.

7. Serveur selon la revendication 6, comprenant en outre une section de traitement de charge pour calculer une charge d'utilisation sur la base des informations connexes au contenu chiffrées et/ou des informations relatives aux clés de chiffrement, chacune des informations étant transmise via le réseau.

8. Procédé de distribution de contenu utilisant un serveur et un terminal utilisateur (100) lesquels sont connectés via un réseau, dans lequel :
le serveur comprend les étapes consistant à :
acquérir des informations connexes au contenu par le biais d'une section d'acquisition ;
chiffrer, par le biais d'une section de chiffrement (300), les informations connexes au contenu acquises par la section d'acquisition ;
stocker, par le biais d'un stockage de contenu chiffré (400), les informations connexes au contenu chiffrées par la section de chiffrement ;
faire convertir, par le biais d'un stockage de clés de chiffrement (400), les informations relatives aux clés de chiffrement, utilisées pour le chiffrement par la section de chiffrement, en un flux, et stocker les informations relatives aux clés de chiffrement ; et
le terminal utilisateur (100) comprend les étapes ci-dessous consistant à :
recevoir les informations connexes au contenu chiffrées en provenance du serveur, par le biais d'une première section de communication, via un premier réseau ;
recevoir les informations relatives aux clés de chiffrement converties en un flux à partir du serveur, par le biais d'une seconde section de communication, via un second réseau présentant un débit inférieur à celui du premier réseau ; et
déchiffrer, par le biais d'une section de déchiffrement, les informations connexes au contenu chiffrées reçues par la première section de communication, en utilisant les informations relatives aux clés de chiffrement reçues par la seconde section de communication, **caractérisé en ce que** le serveur comporte en outre l'étape ci-dessous consistant à :
mesurer, par le biais d'une section de mesure de transmission, l'état de transmission des informations relatives aux clés de chiffrement de manière à permettre au terminal utilisateur de recevoir les informations relatives aux clés de chiffrement par le biais de la seconde section de communication, dans lequel, à l'étape de mesure, la section de mesure de transmission mesure le temps et/ou le nombre de transmissions des informations relatives aux clés de chiffrement au terminal utilisateur.

9. Procédé de distribution de contenu selon la revendication 8, dans lequel le serveur comprend en outre l'étape consistant à calculer une charge d'utilisation, par le biais d'une section de traitement de charge, sur la base des informations connexes au contenu chiffrées et/ou des informations relatives aux clés de chiffrement, chacune des informations étant reçue par le terminal utilisateur via le réseau.

10. Procédé de distribution de contenu selon la revendication 8 ou 9, dans lequel le terminal utilisateur comprend en outre l'étape consistant à afficher par le biais d'un affichage les informations chiffrées connexes au contenu déchiffrées par la section de déchiffrement.

11. Procédé de distribution de contenu selon l'une quelconque des revendications 8 à 10, dans lequel le le serveur comprend en outre les étapes consistant à :
générer, par le biais d'une section de génération, des informations connexes au contenu partielles qui sont acquises par la section d'acquisition et qui ne sont pas chiffrées par la section de chiffrement ; et
permettre aux informations connexes au contenu partielles non chiffrées générées par la section de génération d'être divulguées par une section de divulgation d'informations connexes au contenu partielles et d'être consultées par le terminal utilisateur.

12. Procédé de distribution de contenu selon l'une quelconque des revendications 8 à 11, dans lequel le serveur comprend en outre l'étape consistant à divulguer, par le biais d'une section de divulgation d'informations de localisation de clés de chiffrement, des informations de localisation de l'emplacement où les informations relatives aux clés de chiffrement sont stockées par le stockage de clés de chiffrement, pour permettre au terminal utilisateur de consulter les informations de localisation.
